# EUROPEAN PATENT APPLICATION

(11) **EP 4 715 536 A1**
(43) Date of publication of application: **25.03.2026**
(21) Application number: 25203818.7
(22) Date of filing: 22.09.2025
(51) Int. Cl.: G06F 3/01, B60K 35/10, F16M 11/18, G02B 27/00

(54) **DISPLAY CONTROL METHOD AND APPARATUS, COMPUTER PROGRAM PRODUCT, AND STORAGE MEDIUM**

(30) Priority: 23.09.2024 CN 202411328655
(71) Applicant: Harman Becker Automotive Systems GmbH, 76307 Karlsbad (DE)
(72) Inventor: TANG, Shichao, Shanghai, 200135 (CN); RAO, Hui, Shanghai, 200235 (CN); WELKE, Joerg, 76307 Karlsbad (DE)
(74) Representative: Rummler, Felix

(57) **Abstract**

Embodiments of the present disclosure provide a display control method and apparatus, a computer program product, and a computer-readable storage medium. The method provided by the embodiments of the present disclosure starts, based on an acquired trigger signal, performing tracking of a user indicated by the trigger signal by a display, where, by using a camera to attempt to capture a head image of the user, in a case where the head image of the user is captured, the display may be rotated to be directed toward the head of the user by determining a head position of the user, and in a case where the head image of the user is not captured, the display may be rotated based on an indication of the trigger signal, so as to attempt to capture the head image of the user in the process of rotating the display, and in a case where the head image of the user is captured, the display may be rotated to be directed toward the head of the user, thereby achieving tracking of the head of the user, so as to cause the display to maintain an optimal viewable angle for the user.

## Description

### Technical Field

The present disclosure relates to the field of artificial intelligence, and more particularly, to a display control method and apparatus, a computer program product, and a storage medium.

### Background

In today's rapidly developing information technology era, displays serve as important media for information dissemination and human-computer interaction, and the optimization of their design and functionality becomes particularly necessary. To adapt to rapidly changing work and living environments, display methods of displays have also become increasingly diversified. However, while conventional display designs meet diversified user needs, they still exhibit significant problems that increasingly affect user experience and work efficiency.

Currently, most displays on the market still adopt a fixed-angle design. Although this design can satisfy daily requirements in static usage scenarios, during dynamic usage, its limitations become apparent. For example, when a user moves, turns, or tilts, a fixed display cannot consistently maintain an optimal viewable angle, causing line-of-sight deviation. This not only induces visual fatigue, especially during prolonged use, but may also degrade user experience during work or entertainment. In certain specific scenarios, such line-of-sight deviation may even threaten user safety. For instance, during vehicle driving, in a case where the display becomes invisible due to movement of the user, the user cannot access information provided by the vehicle driving system, which may cause the user to miss critical warning information, etc., placing the user in danger. Additionally, even if the vehicle is not currently in a critical situation, the invisibility of the display caused by movement of the user still affects information acquisition by the user from the vehicle driving system, which will significantly impact the driving experience of the user.

Therefore, an effective display control method is needed to adapt to display scenarios where user movement may occur.

### Summary

To solve the above problems, in the present disclosure, by rotating the display according to a head position of a user, the display is enabled to rotate following changes in the head position of the user, so as to maintain an optimal viewable angle for the user, thereby avoiding line-of-sight deviation of the user from the display, and improving the user experience.

Embodiments of the present disclosure provide a display control method and apparatus, a device, a computer program product, and a computer-readable storage medium.

An embodiment of the present disclosure provides a display control method, where a display is electrically connected to a camera, the method including: capturing images with the camera based on a trigger signal, where the trigger signal indicates for which user among one or more users, a head image is to be captured; in response to the images captured by the camera including a head image of the user, determining a head position of the user, and rotating the display to orient toward the head of the user based on the determined head position; and in response to the images captured by the camera not including the head image of the user, performing one of the following two: rotating the display to a predetermined position; or rotating the display based on the trigger signal and capturing images with the camera in the process of rotating the display, determining whether the images captured by the camera in the process of rotating the display include the head image of the user, and in response to the images captured by the camera in the process of rotating the display including the head image of the user, determining the head position of the user and rotating the display to orient toward the head of the user based on the determined head position.

According to an embodiment of the present disclosure, the display is integrated with the camera, or the display is separated from the camera, where rotating the display to orient toward the head of the user includes: rotating the display to orient toward the head of the user by using a transmission mechanism rigidly connected to the display, where the transmission mechanism includes a base and an electric motor.

According to an embodiment of the present disclosure, the trigger signal indicates a tracking mode of the display for the head of the user, the tracking mode including an instant tracking mode and a continuous tracking mode, where the continuous tracking mode indicates continuous tracking of the head of the user by the display, and the instant tracking mode indicates a discontinuous tracking of the head of the user by the display.

According to an embodiment of the present disclosure, the method further includes: in a case where the trigger signal indicates the continuous tracking mode of the display for the head of the user, after rotating the display to orient toward the head of the user, in response to movement of the head of the user, rotating the display based on the movement, so as to rotate the display to orient toward the head of the user after the movement.

According to an embodiment of the present disclosure, in response to the movement of the head of the user, rotating the display based on the movement, so as to rotate the display to orient toward the head of the user after the movement includes: in response to the movement of the head of the user, rotating the display, and capturing images with the camera; and in response to the images captured by the camera including the head image of the user, determining a post-movement head position of the user, and rotating the display to orient toward the head of the user after the movement based on the determined post-movement head position.

According to an embodiment of the present disclosure, the method further includes: in a case where the trigger signal indicates the instant tracking mode of the display for the head of the user, after rotating the display to orient toward the head of the user, or in response to the images captured by the camera in the process of rotating the display not including the head image of the user, stopping the tracking of the head of the user by the display.

According to an embodiment of the present disclosure, the method further includes: in response to the images captured by the camera in the process of rotating the display not including the head image of the user, rotating the display to a predetermined position.

According to an embodiment of the present disclosure, capturing the head image of the user with the camera in the process of rotating the display includes: capturing an image with the camera in the process of rotating the display; performing recognition on the image captured by the camera to determine whether the head of the user can be located; and in response to determining that the head of the user can be located based on the recognition on the image captured by the camera, determining that the head image of the user is captured, and taking the image captured by the camera as the head image of the user.

The embodiments of the present disclosure provide a display control apparatus, the apparatus including one or more modules configured to implement the display control method as described above.

The embodiments of the present disclosure provide a display control device, including: one or more processors; and one or more memories, where the one or more memories store a computer-executable program that, when executed by the processors, perform the display control method as described above.

The embodiments of the present disclosure provide a computer-readable storage medium having computer-executable instructions stored thereon, where the instructions, when executed by a processor, are used to implement the display control method as described above.

The embodiments of the present disclosure provide a computer program product or a computer program, where the computer program product or the computer program includes computer instructions stored in a computer-readable storage medium. The processor of the computer device reads the computer instructions from the computer-readable storage medium, and the processor executes the computer instructions, causing the computer device to execute the display control method according to the embodiments of the present disclosure.

The method provided by the embodiments of the present disclosure starts, based on an acquired trigger signal, performing tracking of a user indicated by the trigger signal by a display, where, by using a camera to attempt to capture a head image of the user, in a case where the head image of the user is captured, the display may be rotated to be directed toward the head of the user by determining a head position of the user, and in a case where the head image of the user is not captured, the display may be rotated based on an indication of the trigger signal, so as to attempt to capture the head image of the user in the process of rotating the display, and in a case where the head image of the user is captured, the display may be rotated to be directed toward the head of the user, thereby achieving tracking of the head of the user, so as to cause the display to maintain an optimal viewable angle for the user.

### Brief Description of the Drawings

In order to more clearly illustrate technical solutions of embodiments of the present disclosure, drawings used in the description of the embodiments will be briefly introduced below. Obviously, the drawings in the following description are merely some exemplary embodiments of the present disclosure, and for those of ordinary skill in the art, other drawings can also be obtained according to these drawings without creative labor.
FIG. 1 is a flowchart illustrating a display control method according to an embodiment of the present disclosure;
FIG. 2 is a schematic flowchart illustrating the display control method in a vehicle driving scenario according to an embodiment of the present disclosure;
FIG. 3 is a schematic diagram illustrating a physical structural relationship between a display and a transmission mechanism according to an embodiment of the present disclosure;
FIG. 4 is a schematic diagram illustrating control of the display by a transmission mechanism according to an embodiment of the present disclosure;
FIG. 5 illustrates a schematic diagram of a display control device according to an embodiment of the present disclosure; and
FIG. 6 illustrates a schematic diagram of an architecture of an exemplary computing device according to an embodiment of the present disclosure.

### Detailed Description

In order to make objectives, technical solutions, and advantages of the present disclosure more apparent, exemplary embodiments according to the present disclosure will be described in detail below with reference to the accompanying drawings. Obviously, the described embodiments are merely a part of embodiments of the present disclosure rather than all embodiments of the present disclosure, and it should be understood that the present disclosure is not limited by the exemplary embodiments described herein.

In this specification and the accompanying drawings, substantially the same or similar steps and elements are represented by same or similar reference numerals, and repeated descriptions of these steps and elements will be omitted. Meanwhile, in the description of the present disclosure, terms "first", "second", and the like are used only for distinguishing descriptions, and cannot be understood as indicating or implying relative importance or ordering.

In the embodiments of the present disclosure, the term "module" or "unit" refers to a computer program or part of a computer program with a predetermined function, which cooperates with other relevant parts to achieve predetermined objectives, and may be fully or partially implemented using software, hardware (such as processing circuitry or memory), or a combination thereof. Similarly, one processor (or a plurality of processors or memories) may be used to implement one or more modules or units. Furthermore, each module or unit may be part of an integrated module or unit containing the functions of that module or unit.

Unless otherwise defined, all technical and scientific terms used herein have the same meanings as commonly understood by those skilled in the technical field to which the present disclosure belongs. The terms used herein are for the purpose of describing embodiments of the present invention only, and are not intended to limit the present invention.

Displays, as important tools for human-computer interaction, are widely used in various scenarios, from offices to entertainment, and even in vehicle driving. However, most displays on the market still adopt a fixed-angle design. Although this design can satisfy daily requirements in static usage scenarios, during dynamic usage, its limitations gradually become apparent, bringing many inconveniences to user experience.

For example, when a user moves, turns, or tilts, a fixed-angle display cannot consistently maintain an optimal viewable angle, causing line-of-sight deviation. This situation is particularly noticeable during prolonged use, and users may experience visual fatigue due to having to adjust their posture to view the screen. Visual fatigue not only affects the efficiency in work or entertainment but may also cause long-term impacts on the health of the user.

As another example, in certain specific scenarios, line-of-sight deviation of a fixed display may even threaten user safety. As an example, in a vehicle driving scenario, if the display becomes invisible due to movement of the user, the user will be unable to timely obtain important information provided by the vehicle driving system. Such lack of information may cause the user to miss critical warning signals, thereby increasing the risk of accidents. Even when the vehicle is not in a critical situation, the invisibility of the display affects the user's ability to obtain driving information, thus significantly reducing the driving experience.

Therefore, to address the limitations of the fixed-angle display design, the present disclosure proposes an effective display control method which, by rotating the display according to a head position of a user, enables the display to rotate following changes in the head position of the user, so as to maintain an optimal viewable angle for the user, thereby avoiding line-of-sight deviation of the user from the display, such that the user can obtain an optimal viewing experience in different usage scenarios.

The method provided by the embodiments of the present disclosure starts, based on an acquired trigger signal, performing tracking of a user indicated by the trigger signal by a display, where, by using a camera to attempt to capture a head image of the user, in a case where the head image of the user is captured, the display may be rotated to be directed toward the head of the user by determining a head position of the user, and in a case where the head image of the user is not captured, the display may be rotated based on an indication of the trigger signal, so as to attempt to capture the head image of the user in the process of rotating the display, and in a case where the head image of the user is captured, the display may be rotated to be directed toward the head of the user, thereby achieving tracking of the head of the user, so as to cause the display to maintain an optimal viewable angle for the user.

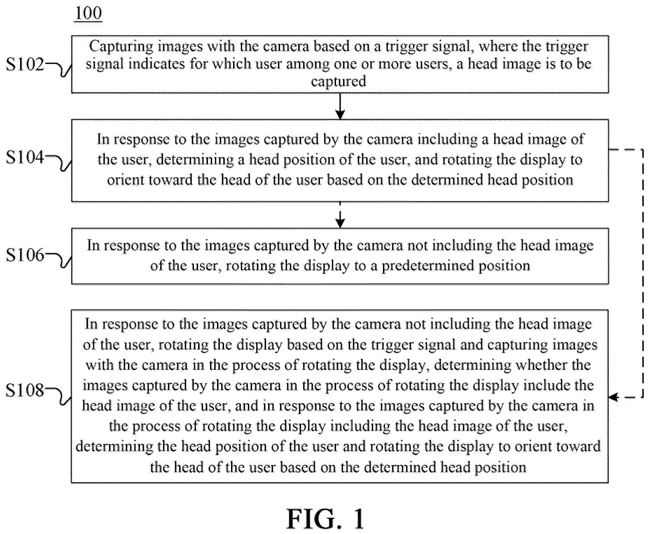

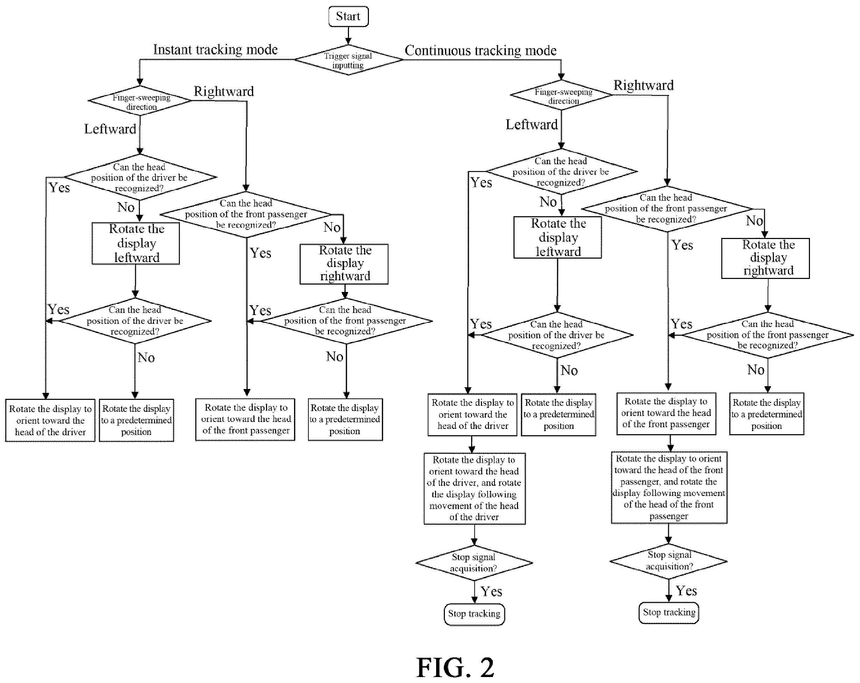

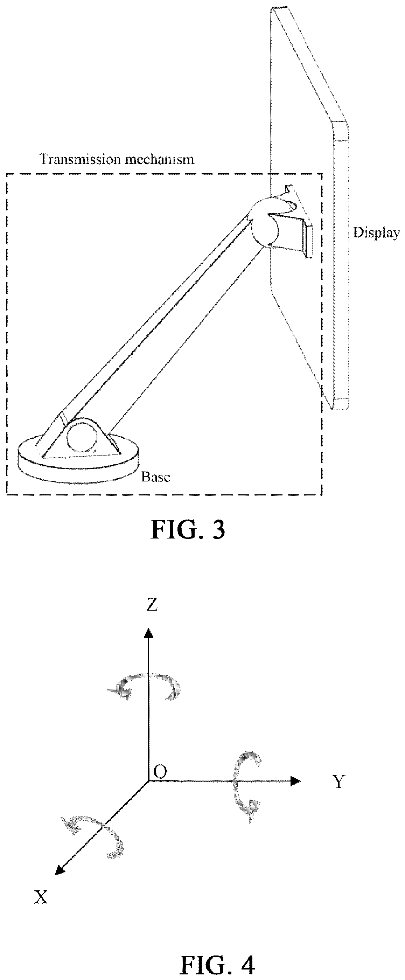

FIG. 1 is a flowchart illustrating a display control method 100 according to an embodiment of the present disclosure. FIG. 2 is a schematic flowchart illustrating the display control method in a vehicle driving scenario according to an embodiment of the present disclosure. FIG. 3 is a schematic diagram illustrating a physical structural relationship between a display and a transmission mechanism according to an embodiment of the present disclosure. FIG. 4 is a schematic diagram illustrating control of the display by a transmission mechanism according to an embodiment of the present disclosure.

In an embodiment of the present disclosure, the display may be rotated according to a head position of a user, enabling the display to rotate following changes in the head position of the user, so as to maintain an optimal viewable angle for the user. Specifically, the head position of the user may be determined based on a head image of the user acquired by a camera. According to embodiments of the present disclosure, the display is electrically connected to the camera. That is, in embodiments of the present disclosure, the display may be integrated with the camera, or the display may be separated from the camera.

As an example, in a case where the display is integrated with the camera, the camera can rotate following rotation of the display, thereby enabling images to be captured within a larger spatial range with a camera having the same field of view (FOV). As another example, in a case where the display is separated from the camera, for cost considerations, the camera may generally be fixed; therefore, in this case, images within a fixed spatial range can be captured by the camera, and tracking of a target (for example, the head of the user) can be implemented by rotating the display. The display control method of the present disclosure can be applied to the above two cases. For example, in a case where the display is integrated with the camera, a camera having a relatively small FOV can be adopted to perform image capturing, so as to reduce hardware costs; while in a case where the display is separated from the camera, a camera having a relatively large FOV can be adopted to perform image capturing, so as to capture a target within as large a spatial range as possible.

As described above, the display control method of the present disclosure is particularly applicable in some specific scenarios, for example, the vehicle driving scenario given as an example above. Specifically, for the vehicle driving scenario, the display control method of the present disclosure can enable the user to timely obtain important information provided by a vehicle driving system, especially when the posture of the user changes and it is difficult to manually operate the display, thereby significantly enhancing the driving experience and ensuring driving safety. Therefore, the vehicle driving scenario will be taken as an example below to introduce the display control method of the present disclosure. However, it should be understood that the display control method of the present disclosure, besides the aforementioned vehicle driving scenario, can also be applied to various other scenarios, including but not limited to the aforementioned video conference scenario, and scenarios such as performances for teleprompting (for example, speeches, singing, etc.), which is not limited in the present disclosure.

In step S102, images may be captured with the camera based on a trigger signal, where the trigger signal may indicate for which user among one or more users, a head image is to be captured.

Optionally, the image capturing operation of the camera may be triggered by acquiring the trigger signal. Here, acquisition of the trigger signal may include multiple ways, for example, button pressing, gesture recognition, or touchscreen operation, etc.

Optionally, the display may be used as an acquisition device for the trigger signal. That is, the display may be utilized to acquire the trigger signal through touchscreen operation. Optionally, different touchscreen operations may correspond to different trigger signals to instruct the display to perform different operations.

According to an embodiment of the present disclosure, the trigger signal may indicate a tracking mode of the display for the head of the user, which tracking mode may include an instant tracking mode and a continuous tracking mode, where the continuous tracking mode may indicate continuous tracking of the head of the user by the display, and the instant tracking mode may indicate a discontinuous tracking of the head of the user by the display.

Optionally, the trigger signal may indicate a tracking mode to be adopted by the display, so as to allow flexibly switching the tracking mode for the user according to different scenarios or user requirements. In embodiments of the present disclosure, the tracking mode may include but not be limited to the instant tracking mode and the continuous tracking mode. For example, as shown in FIG. 2, the trigger signal may be input by the user through a screen sweeping action on the display, where corresponding to performing a two-finger screen sweeping action by the user, the input trigger signal may indicate the instant tracking mode, and corresponding to performing a three-finger screen sweeping action by the user, the input trigger signal may indicate the continuous tracking mode. Certainly, these actions and operations performed by the display in response thereto in the present disclosure serve only as examples rather than limitations.

For example, in the instant tracking mode, the display may perform discontinuous tracking for the head of the user. That is, the display may perform adjustment based on the head position of the user, and then stop tracking until a next trigger signal occurs. Therefore, the instant tracking mode may be applicable to scenarios requiring instantaneous adjustment, for example, when the user performs a specific action or speaks and wants the display to quickly align with his/her position, or in a multi-user environment, the instant tracking mode may be used to quickly respond to the action of each user. Therefore, in a case where continuous tracking is not required, the instant tracking mode may be adopted to save resources and reduce power consumption.

For example, in the continuous tracking mode, the display may perform continuous tracking for the head of the user. Specifically, the display may monitor the head position of the user in real time and perform immediate adjustment to ensure always aligning with the user. Therefore, the continuous tracking mode may be applicable to long-duration interactions. For example, in video conferences or online education, the user may move multiple times within the scenario, and the display needs to timely adjust the position to maintain good visual alignment.

Optionally, the trigger signal may further indicate for which user, a head image is to be captured. For example, in a multi-user environment, different trigger signals may be generated through touchscreen operations corresponding to different users, so as to instruct the display to perform different operations. As an example, as shown in FIG. 2, the direction of the screen sweeping action performed by the user (i.e., a finger-sweeping direction) may be used to indicate a target to be tracked. For example, the finger-sweeping direction being leftward (i.e., the user's finger slides leftward on the display screen) may indicate identifying a target on the left side of the display, and the finger-sweeping direction being rightward (i.e., the user's finger slides rightward on the display screen) may indicate identifying a target on the right side of the display. Such gesture recognition technology may be implemented by combining touchscreen technology and computer vision algorithms, so as to ensure precise recognition of user intention.

Optionally, for the vehicle driving scenario, which user in the vehicle is to be tracked by the display may be indicated through the touchscreen operation as described above. In embodiments of the present disclosure, considering that information is usually provided to a driver or a front passenger during driving, examples of touchscreen operations are given for a scenario where candidate targets in the vehicle include the driver and the front passenger, but this serves only as an example rather than a limitation, and the display control method of the present disclosure may also be applied to scenarios including more candidate targets.

For example, as shown in FIG. 2, the display may be instructed to track the driver on the left side of the display through a touchscreen operation with a leftward finger-sweeping direction, and the display may be instructed to track the front passenger on the right side of the display through a touchscreen operation with a rightward finger-sweeping direction.

Based on this, a target user and a tracking mode for the target user may be determined based on the acquired trigger signal. Next, the determined tracking mode may be adopted to track the target user.

Optionally, in response to acquiring the trigger signal, the image capturing operation of the camera may be triggered, that is, images may be captured by the camera.

In step S104, in response to the images captured by the camera including a head image of the user, a head position of the user may be determined, and the display may be rotated to orient toward the head of the user based on the determined head position.

Optionally, head recognition regarding the user may be performed on the images captured by the camera, for example, through methods such as face detection and key point recognition, which is not limited in the present disclosure. In a case where the head of the target user is recognized in the images captured by the camera, it may be determined that the images captured by the camera include the head image of the user.

Therefore, the head position of the user may be determined based on the image of the head of the target user that is recognized in the images captured by the camera. For example, the head position of the user may be a position of the head of the user in a three-dimensional space.

Optionally, based on the determined head position, the display may be rotated to be aligned with the head of the user. According to an embodiment of the present disclosure, rotating the display to orient toward the head of the user may include: rotating the display to orient toward the head of the user by using a transmission mechanism rigidly connected to the display, where the transmission mechanism may include a base and an electric motor.

Optionally, based on the determined head position of the user, the transmission mechanism rigidly connected to the display may be controlled to rotate the display to a corresponding angle to align with the head of the user.

Optionally, as shown in FIG. 3, a rigid connection may be established between the transmission mechanism and the display. As an example, the transmission mechanism may include a base and an electric motor (not shown), where the base may be connected to other stable structures (for example, a vehicle body in the vehicle driving scenario) to ensure that the display is stable and can withstand rotational motion, and the electric motor may be configured to drive rotation of the display. As an example, as shown in FIG. 4, after the electric motor receives a control signal, it may drive the display to rotate according to coordinate axes of a rotation coordinate system (for example, one or more of x, y, and z axes) to ensure that it is always directed toward the user.

Optionally, in a case where the images captured by the camera in response to the trigger signal include the head image of the user, after rotating the display to orient toward the head of the user, different operations may be performed based on different information indicated by the trigger signal. For example, in a case where the trigger information indicates the tracking mode and the target user as described above, after rotating the display to orient toward the head of the target user, the following processing may be further performed based on the tracking mode and the target user indicated by the trigger signal.

According to an embodiment of the present disclosure, the display control method of the present disclosure may further include: in a case where the trigger signal indicates the continuous tracking mode of the display for the head of the user, after rotating the display to orient toward the head of the user, in response to movement of the head of the user, rotating the display based on the movement, so as to rotate the display to orient toward the head of the user after the movement.

As shown in FIG. 2, corresponding to the continuous tracking mode indicated by the trigger signal corresponding to the three-finger screen sweeping action, after rotating the display to orient toward the head of the target user (for example, the driver or the front passenger), in the continuous tracking mode, head following of the target user may additionally be maintained, that is, the display is correspondingly rotated as the head of the target user moves, thereby causing the display to always align with the head of the target user.

According to an embodiment of the present disclosure, in response to the movement of the head of the user, rotating the display based on the movement, so as to rotate the display to orient toward the head of the user after the movement may include: in response to the movement of the head of the user, rotating the display, and capturing images with the camera; and in response to the images captured by the camera including the head image of the user, determining a post-movement head position of the user, and rotating the display to orient toward the head of the user after the movement based on the determined post-movement head position.

Specifically, in the continuous tracking mode, in a case where movement of the head of the user is detected, the display may be controlled to rotate consistently with a movement direction of the head of the target user, and at the same time, an image may be captured by the camera to attempt to capture the head of the user after the movement.

Optionally, in a case where the head image of the user is captured in a process of rotating the display, the post-movement head position of the user may be determined based on the head image, similarly to the above description with reference to step S104, so as to adjust the orientation of the display based on the post-movement head position, aligning it with the head of the target user after the movement.

Based on this, the display may be adjusted to an optimal viewable angle for the user in a case where the images captured by the camera in response to the trigger signal include the head image of the user, so as to cause the display to align with the head of the user, thereby providing an optimal visual effect for the user.

Conversely, in a case where the image captured by the camera in response to the trigger signal does not include the head image of the user, either of step S106 and step S 108 may be executed. Here, step S106 and step S 108 may correspond to the case where the display is separated from the camera and the case where the display is integrated with the camera as described above, respectively.

In step S106, in response to the images captured by the camera not including the head image of the user, the display may be rotated to a predetermined position.

Optionally, in a case where the display is separated from the camera, if the camera cannot capture the head image of the target user at its fixed position, it may be determined that the target user does not exist within the field of view range of the current camera or the head of the target user cannot be located, and therefore tracking of the target user may be decided to be stopped, and the display may be rotated to the predetermined position. Here, the predetermined position may be a default position of the display, or an initial position of the display at the start of this tracking, which is not limited in the present disclosure.

In step S108, in response to the images captured by the camera not including the head image of the user, the display may be rotated based on the trigger signal and images may be captured with the camera in the process of rotating the display, it is determined whether the images captured by the camera in the process of rotating the display include the head image of the user, and in response to the images captured by the camera in the process of rotating the display including the head image of the user, the head position of the user is determined and the display is rotated to orient toward the head of the user based on the determined head position.

Optionally, in a case where the display is integrated with the camera, if the camera cannot capture the head image of the target user at its current position, the orientation of the display may be adjusted according to information indicated by the trigger signal, thereby changing the field of view range of the camera. For example, as shown in FIG. 2, in the vehicle driving scenario, in response to the images captured by the camera not including the head image of the target user (that is, the head position of the target user cannot be recognized currently), a rotation direction of the display may be determined based on an orientation of the target indicated by the trigger signal. For example, in a case where the trigger signal indicates identifying the driver in the vehicle (for example, through a touchscreen operation with a leftward finger-sweeping direction), the display may rotate leftward to identify the driver on the left side of the display; and in a case where the trigger signal indicates identifying the front passenger in the vehicle (for example, through a touchscreen operation with a rightward finger-sweeping direction), the display will rotate rightward to identify the front passenger on the right side of the display.

Optionally, in a process of rotating the display based on the trigger signal, image capturing may continue to be performed to determine whether the head position of the target user can be recognized, as shown in FIG. 2.

According to an embodiment of the present disclosure, the display control method of the present disclosure may further include: in response to the images captured by the camera in the process of rotating the display not including the head image of the user, rotating the display to a predetermined position.

Optionally, for a case where the display still cannot capture the head image of the target user even after being rotated, it may be determined that the target user does not exist within the current spatial range or the head of the target user cannot be located, and therefore tracking of the target user may be decided to be stopped, and the display may be rotated to the predetermined position.

According to an embodiment of the present disclosure, the display control method of the present disclosure may further include: in a case where the trigger signal indicates the instant tracking mode of the display for the head of the user, after rotating the display to orient toward the head of the user, or in response to the images captured by the camera in the process of rotating the display not including the head image of the user, stopping the tracking of the head of the user by the display.

Optionally, in the instant tracking mode, if the head position of the target user can be recognized, tracking of the head of the target user by the display may be stopped after rotating the display to orient toward the head of the target user. Conversely, if the head position of the target user cannot be recognized even by rotating the display to change the field of view range of the camera, tracking of the head of the target user by the display may be stopped immediately, and additionally, the display may be rotated to the predetermined position.

Furthermore, for the aforementioned continuous tracking mode, the display control method of the present disclosure may further include: in response to acquiring a stop signal, stopping tracking of the head of the user by the display. That is, in the continuous tracking mode, if the target user wishes to stop tracking thereof, or the target is lost during continuous tracking, the stop signal may additionally be acquired to terminate tracking of the head of the user by the display, as shown in FIG. 2. The stop signal may be a signal actively sent by the user, for example, sent by means of button pressing, gesture recognition, or touchscreen operations similarly to the trigger signal. The stop signal may also be a signal passively sent in response to a termination event occurring during the continuous tracking, the termination event including, for example, losing the target, which is not limited in the present disclosure.

Therefore, through the above description with reference to steps S102-S108, the display control method of the present disclosure may start, based on an acquired trigger signal, performing tracking of a user indicated by the trigger signal by a display, where, by using a camera to attempt to capture a head image of the user, in a case where the head image of the user is captured, the display may be rotated to be directed toward the head of the user by determining a head position of the user, and in a case where the head image of the user is not captured, the display may be rotated based on an indication of the trigger signal, so as to attempt to capture the head image of the user in the process of rotating the display, and in a case where the head image of the user is captured, the display may be rotated to be directed toward the head of the user, thereby achieving tracking of the head of the user, so as to cause the display to maintain an optimal viewable angle for the user.

According to an aspect of the present disclosure, a display control apparatus is provided. The apparatus includes one or more modules for implementing the display control method as described above. Optionally, these modules may perform operations as described above with reference to the method 100, which will not be repeated here in the present disclosure.

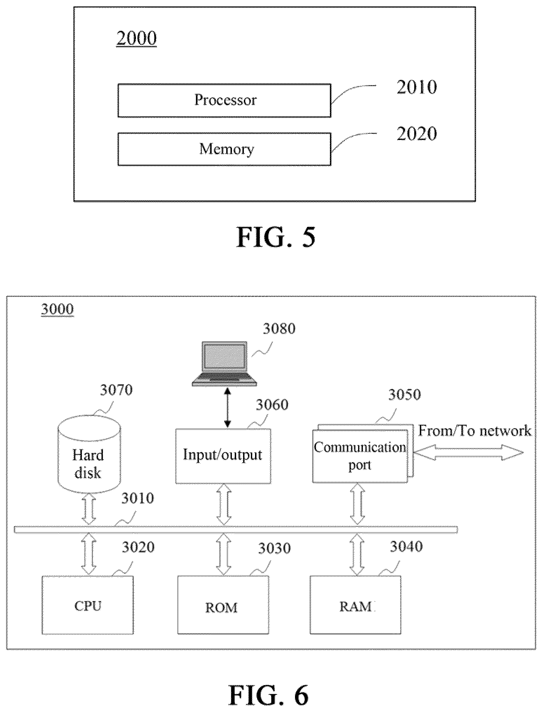

According to still another aspect of the present disclosure, a display control device is further provided. FIG. 5 illustrates a schematic diagram of a display control device 2000 according to an embodiment of the present disclosure.

As shown in FIG. 5, the display control device 2000 may include one or more processors 2010, and one or more memories 2020. The memories 2020 store computer-readable code which, when executed by the one or more processors 2010, can cause the display control method as described above to be executed.

The processor in the embodiments of the present disclosure may be an integrated circuit chip having signal processing capabilities. The above processor may be a general-purpose processor, a digital signal processor (DSP), an application-specific integrated circuit (ASIC), a field-programmable gate array (FPGA) or other programmable logic devices, discrete gates or transistor logic devices, or discrete hardware components. Methods, steps, and logical block diagrams disclosed in the embodiments of the present application can be implemented or executed. The general-purpose processor may be a microprocessor or the processor may also be any conventional processor, etc., and may be of X86 architecture or ARM architecture.

In general, various example embodiments of the present disclosure may be implemented in hardware or dedicated circuits, software, firmware, logic, or any combination thereof. Certain aspects may be implemented in hardware, whereas other aspects may be implemented in firmware or software that can be executed by a controller, microprocessor or other computing devices. When aspects of the embodiments of the present disclosure are illustrated or described as block diagrams, flowcharts or using certain other graphical representations, it will be understood that the blocks, apparatuses, systems, techniques or methods described herein may be implemented as non-limiting examples in hardware, software, firmware, dedicated circuits or logic, general purpose hardware or controllers or other computing devices, or some combination thereof.

For example, the method or apparatus according to the embodiments of the present disclosure may also be implemented by means of the architecture of the computing device 3000 shown in FIG. 6. As shown in FIG. 6, the computing device 3000 may include a bus 3010, one or more CPUs 3020, a read-only memory (ROM) 3030, a random access memory (RAM) 3040, a communication port 3050 connected to a network, input/output components 3060, a hard disk 3070, etc. Storage devices in the computing device 3000, for example, the ROM 3030 or the hard disk 3070, may store various data or files used for processing and/or communication of the display control method provided by the present disclosure and program instructions executed by the CPU. The computing device 3000 may further include a user interface 3080. Certainly, the architecture shown in FIG. 6 is only exemplary; when implementing different devices, one or more components of the computing device shown in FIG. 6 may be omitted according to actual needs.

According to still another aspect of the present disclosure, a computer-readable storage medium is also provided. The computer storage medium has computer-readable instructions stored thereon. When the computer-readable instructions are run by a processor, the display control method according to the embodiments of the present disclosure described with reference to the above accompanying drawings can be executed. The computer-readable storage medium in the embodiments of the present disclosure may be volatile memory or non-volatile memory, or may include both volatile and non-volatile memory. Non-volatile memory may be read-only memory (ROM), programmable read-only memory (PROM), erasable programmable read-only memory (EPROM), electrically erasable programmable read-only memory (EEPROM), or flash memory. Volatile memory may be random access memory (RAM), which functions as external cache memory. By way of exemplary but non-limiting illustration, many forms of RAM are usable, such as static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synch link dynamic random access memory (SLDRAM), and direct rambus random access memory (DR RAM). It should be noted that the memory of the methods described herein is intended to include but not be limited to these and any other suitable types of memory. It should be noted that the memory of the methods described herein is intended to include but not be limited to these and any other suitable types of memory.

The embodiments of the present disclosure further provide a computer program product or a computer program, where the computer program product or the computer program includes computer instructions stored in a computer-readable storage medium. The processor of the computer device reads the computer instructions from the computer-readable storage medium, and the processor executes the computer instructions, causing the computer device to execute the display control method according to the embodiments of the present disclosure.

Embodiments of the present disclosure provide a display control method and apparatus, a computer program product, and a computer-readable storage medium.

The method provided by the embodiments of the present disclosure starts, based on an acquired trigger signal, performing tracking of a user indicated by the trigger signal by a display, where, by using a camera to attempt to capture a head image of the user, in a case where the head image of the user is captured, the display may be rotated to be directed toward the head of the user by determining a head position of the user, and in a case where the head image of the user is not captured, the display may be rotated based on an indication of the trigger signal, so as to attempt to capture the head image of the user in the process of rotating the display, and in a case where the head image of the user is captured, the display may be rotated to be directed toward the head of the user, thereby achieving tracking of the head of the user, so as to cause the display to maintain an optimal viewable angle for the user.

It should be noted that the flowcharts and block diagrams in the accompanying drawings illustrate possible architectures, functions, and operations of systems, methods, and computer program products according to various embodiments of the present disclosure. In this regard, each block in a flowchart or block diagram may represent a module, a program segment, or a portion of code, where the module, the program segment, or the portion of code contains at least one executable instruction for implementing a specified logical function. It should also be noted that, in some alternative implementations, the functions indicated in the blocks may occur in an order different from the order indicated in the drawings. For example, two blocks shown as consecutive may in fact be executed substantially concurrently, or they may sometimes be executed in reverse order, depending on the functions involved. It should also be noted that each block in the block diagram and/or flowchart, as well as combinations of blocks in the block diagram and/or flowchart, may be implemented by a dedicated hardware-based system that performs the specified functions or operations, or by a combination of dedicated hardware and computer instructions.

In general, various example embodiments of the present disclosure may be implemented in hardware or dedicated circuits, software, firmware, logic, or any combination thereof. Certain aspects may be implemented in hardware, whereas other aspects may be implemented in firmware or software that can be executed by a controller, microprocessor or other computing devices. When aspects of the embodiments of the present disclosure are illustrated or described as block diagrams, flowcharts or using certain other graphical representations, it will be understood that the blocks, apparatuses, systems, techniques or methods described herein may be implemented as non-limiting examples in hardware, software, firmware, dedicated circuits or logic, general purpose hardware or controllers or other computing devices, or some combination thereof.

The exemplary embodiments of the present disclosure described in detail above are merely illustrative and not limiting. Those skilled in the art should understand that various modifications and combinations may be made to these embodiments or features thereof without departing from the principles and spirit of the present disclosure, and such modifications should fall within the scope of the present disclosure.

## Claims

1. A display control method, wherein a display is electrically connected to a camera, the method comprising:
capturing images with the camera based on a trigger signal, wherein the trigger signal indicates for which user among one or more users, a head image is to be captured;
in response to the images captured by the camera including a head image of the user, determining a head position of the user, and rotating the display to orient toward the head of the user based on the determined head position; and
in response to the images captured by the camera not including the head image of the user, performing one of the following two:
rotating the display to a predetermined position; or
rotating the display based on the trigger signal and capturing images with the camera in the process of rotating the display, determining whether the images captured by the camera in the process of rotating the display include the head image of the user, and in response to the images captured by the camera in the process of rotating the display including the head image of the user, determining the head position of the user and rotating the display to orient toward the head of the user based on the determined head position.

2. The method of claim 1, wherein the display is integrated with the camera, or the display is separated from the camera,
wherein rotating the display to orient toward the head of the user comprises:
rotating the display to orient toward the head of the user by using a transmission mechanism rigidly connected to the display, wherein the transmission mechanism comprises a base and an electric motor.

3. The method of claim 1 or 2, wherein the trigger signal indicates a tracking mode of the display for the head of the user, the tracking mode comprising an instant tracking mode and a continuous tracking mode, wherein the continuous tracking mode indicates continuous tracking of the head of the user by the display, and the instant tracking mode indicates a discontinuous tracking of the head of the user by the display.

4. The method of claim 3, further comprising:
in a case where the trigger signal indicates the continuous tracking mode of the display for the head of the user, after rotating the display to orient toward the head of the user, in response to movement of the head of the user, rotating the display based on the movement, so as to rotate the display to orient toward the head of the user after the movement.

5. The method of claim 4, wherein, in response to the movement of the head of the user, rotating the display based on the movement, so as to rotate the display to orient toward the head of the user after the movement comprises:
in response to the movement of the head of the user, rotating the display, and capturing images with the camera; and
in response to the images captured by the camera including the head image of the user, determining a post-movement head position of the user, and rotating the display to orient toward the head of the user after the movement based on the determined post-movement head position.

6. The method of claim 3, 4 or 5, further comprising:
in a case where the trigger signal indicates the instant tracking mode of the display for the head of the user, after rotating the display to orient toward the head of the user, or in response to the images captured by the camera in the process of rotating the display not including the head image of the user, stopping the tracking of the head of the user by the display.

7. The method of any preceding claim, further comprising:
in response to the images captured by the camera in the process of rotating the display not including the head image of the user, rotating the display to a predetermined position.

8. A display control apparatus, wherein a display is electrically connected to a camera, the apparatus comprising one or more modules configured to implement the method of any one of claims 1-7.

9. A computer program product stored on a computer-readable storage medium and comprising computer instructions, wherein the computer instructions, when run by a processor, cause a computer device to perform the method of any one of claims 1-7.

10. A computer-readable storage medium having computer-executable instructions stored thereon, wherein the instructions, when executed by a processor, are used to implement the method of any one of claims 1-7.
